# EUROPEAN PATENT SPECIFICATION

(11) **EP 4 485 129 B1**
(45) Date of publication and mention of the grant of the patent: **12.08.2026**
(21) Application number: 24736295.7
(22) Date of filing: 09.05.2024
(51) Int. Cl.: G06F 1/16, H04R 1/28, H04M 1/02, H04M 1/03, H04R 1/02

(54) **ELECTRONIC DEVICE COMPRISING SPEAKER AND MANUFACTURING METHOD THEREFOR**
ELEKTRONISCHE VORRICHTUNG MIT LAUTSPRECHER UND HERSTELLUNGSVERFAHREN DAFÜR
DISPOSITIF ÉLECTRONIQUE COMPRENANT UN HAUT-PARLEUR ET PROCÉDÉ DE FABRICATION ASSOCIÉ

(30) Priority: 16.05.2023 KR 20230063167; 12.07.2023 KR 20230090569
(43) Date of publication of application: 01.01.2025
(73) Proprietor: Samsung Electronics Co., Ltd., Suwon-si, Gyeonggi-do 16677 (KR)
(72) Inventor: YE, Sangmin, Suwon-si, Gyeonggi-do 16677 (KR); HAN, Kwanhee, Suwon-si, Gyeonggi-do 16677 (KR)
(74) Representative: Arnold & Siedsma
(86) International application number: PCT/KR2024/006199
(87) International publication number: WO 2024/237555

(56) References cited:
- KR-A- 20170 059 083
- KR-A- 20200 056 328
- KR-A- 20220 138 666
- KR-A- 20220 145 954
- KR-A- 20230 063 059
- US-A1- 2005 190 941

## Description

### Technical Field

Various embodiments of the disclosure relate to an electronic device including a speaker and a manufacturing method thereof. Other embodiments of the disclosure relate to a speaker device that can be used in such an electronic device.

### Background Art

When a portable terminal device is placed in an environment where an external atmospheric pressure changes (e.g., boarding an airplane, climbing a high altitude), or when a pressure inside the portable terminal device changes (e.g., when an instantaneous pressure is applied to the portable terminal device), an atmospheric pressure difference between upper and lower spaces of a speaker device may cause a phenomenon in which a diaphragm is pushed upward or downward. When the phenomenon in which the diaphragm is pushed continues for a long time, the diaphragm may be damaged.

An additional vent hole may be implemented in the speaker device to prevent the diaphragm of the portable terminal device from being damaged due to the atmospheric pressure difference. The atmospheric pressure in front and rear spaces of the speaker device may be balanced by the vent hole which couples the rear space of the speaker device to the outside of the speaker device. For example, the additional vent hole may include a hole for ventilation.

The above-mentioned vent hole typically has a mesh to maintain the ventilation of the front and back spaces of the speaker device while preventing the escape of particles inside the enclosure of the speaker device and the entry of external foreign objects.

In accordance with its abstract, patent application publication US 2005 / 0190941 A1 provides a cellular phone having a first opening for delivering voice on a shell. A printed circuit board (PCB) is disposed within an inner space enclosed by the shell and divides the inner space into a first acoustic room and a second acoustic room. A speaker is disposed within the first acoustic room and electrically connects the PCB. A through hole is formed on the PCP to communicate with the first acoustic room and the second acoustic room to increase the size of total resonance chamber for improving resonance effect in low frequency voices. Furthermore, at least a second opening is formed on the shell to communicate the first acoustic room or the second acoustic room to the environment for flattening the resonance curve to improve the voice quality.

The aforementioned information may be provided as the related art aiming at aiding understanding of the disclosure. No claim or determination is made as to whether any of the aforementioned content is applicable as the prior art related to the disclosure.

### [Disclosure]

### [Technical Solution]

The invention is set out in the appended claims.

### Description of Drawings

FIG. 1 illustrates an electronic device in a network environment according to an exemplary embodiment;
FIG. 2 is a perspective view illustrating an electronic device according to an exemplary embodiment;
FIG. 3 is a rear perspective view illustrating the electronic device of FIG. 2;
FIG. 4 illustrates a speaker device located inside an electronic device according to an exemplary embodiment;
FIG. 5 is a cross-sectional view conceptually illustrating a speaker device according to an exemplary embodiment;
FIG. 6 illustrates a speaker device according to an exemplary embodiment;
FIG. 7 is a cross-sectional view illustrating the cross-section of FIG. 6;
FIG. 8 illustrates an upper face of a printed circuit board according to an exemplary embodiment;
FIG. 9 illustrates a lower face of a printed circuit board according to an exemplary embodiment;
FIG. 10 is a flowchart illustrating a process of manufacturing an electronic device or a speaker device according to an exemplary embodiment; and
FIG. 11 is a flowchart illustrating a process of manufacturing an electronic device or a speaker device according to an exemplary embodiment;

With regard to the description of the drawings, the same or similar reference numerals may be used to refer to the same or similar elements.

### Mode for Invention

Hereinafter, various embodiments of the disclosure are disclosed with reference to the accompanying drawings. However, it should be appreciated that this is not intended to limit the technological features set forth herein to particular embodiments and include various modifications, equivalents, and/or alternatives for an embodiment of the disclosure.

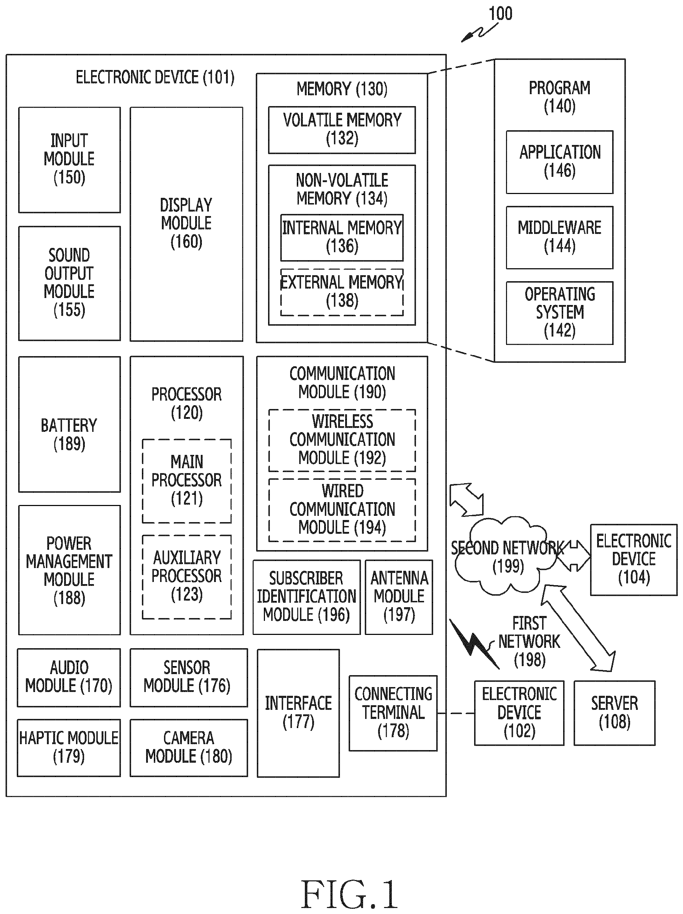

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a **HDMI** connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

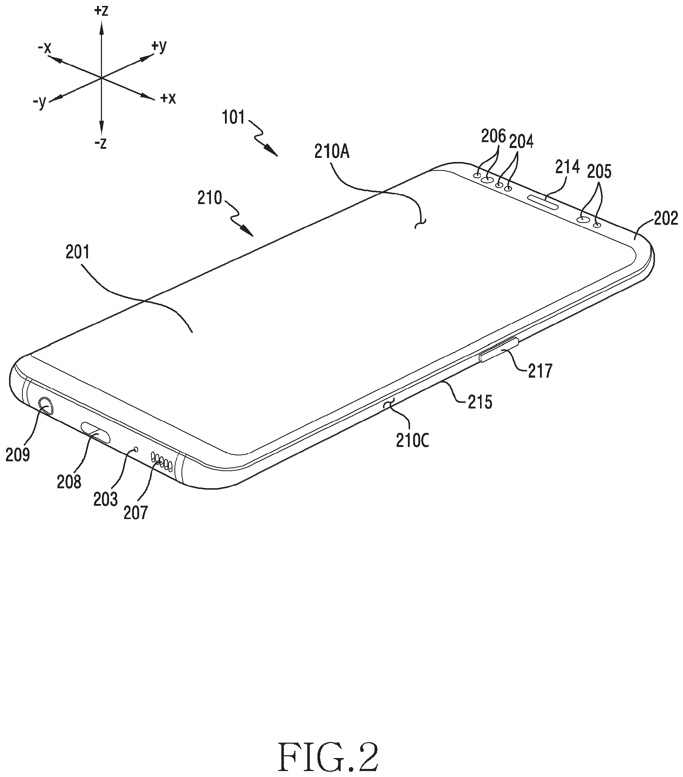

FIG. 2 is a perspective view illustrating an electronic device according to an embodiment.

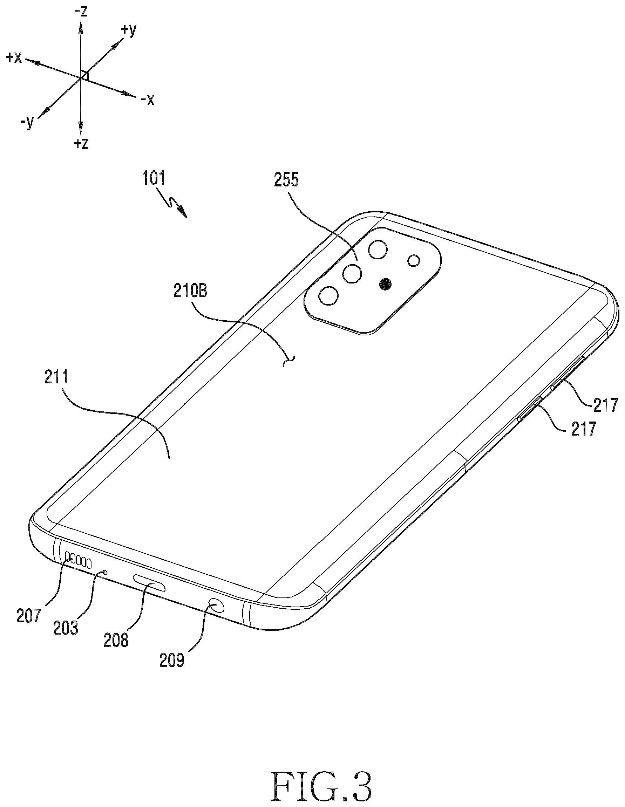

FIG. 3 is a rear perspective view illustrating the electronic device of FIG. 2.

Referring to FIG. 2 and FIG. 3, the electronic device 101 according to an embodiment may include a housing 220 including a first face (or a front face) 210A, a second face (or a rear face) 210B, and a side face (or a sidewall) 210C surrounding a space between the first face 210A and the second face 210B. In an embodiment (not shown), the housing may refer to a structure which forms part of the first face 210A, second face 210B, and side face 210C of FIG. 2 and FIG. 3.

According to an embodiment, the first face 210A of the electronic device 101 may be formed by a front plate 202 (e.g., a polymer plate or a glass plate including various coating layers) which is at least partially transparent in practice. According to an embodiment, the front plate 202 may include a curved portion seamlessly extending by being bent from the first face 210A toward a rear plate 211 in at least one side edge portion.

According to various embodiments, the second face 210B may be formed by the rear plate 211 which is opaque in practice. The rear plate 211 may be formed of, for example, coated or colored glass, ceramic, polymer, metallic materials (e.g., aluminum, stainless steel (STS), or magnesium) or a combination of at least two of the materials. According to an embodiment, the rear plate 211 may include a curved portion seamlessly extending by being bent from the second face 210B toward the front plate 202 in at least one side edge portion.

According to various embodiments, the side face 210C of the electronic device 101 may be coupled to the front plate 202 and the rear plate 211, and may be formed by a frame 210 including metal and/or polymer. In an embodiment, the rear plate 211 and the frame 210 may be formed integrally, and may include substantially the same material (e.g., a metallic material such as aluminum).

According to an embodiment, the electronic device 101 may include at least one of a display 201, the audio module 170, a sensor module 204, a first camera module 205, a key input device 217, a first connector hole 208, and a second connector hole 209. In an embodiment, at least one of components (e.g., the key input device 217) may be omitted in the electronic device 101, or other components may be additionally included. For example, a sensor such as a proximity sensor or an illuminance sensor may be integrated to the display 201 in a region provided by the front plate 202, or may be disposed at a location adjacent to the display 201. In an embodiment, the electronic device 101 may further include a light emitting element 206, and the light emitting element 206 may be disposed at a location adjacent to the display 201 in the region provided by the front plate 202. The light emitting element 206 may provide, for example, state information of the electronic device 101 in an optical form. In an embodiment, the light emitting element 206 may provide, for example, a light source interworking with an operation of the first camera module 205. The light emitting element 206 may include, for example, an LED, an IR LED, and a xenon lamp.

The display 201 may be exposed through, for example, some portions of the front plate 202. In an embodiment, an edge of the display 201 may be formed to be substantially the same as a shape of a periphery (e.g., a curved face) adjacent to the front plate 202. In an embodiment, in order to expand an area in which the display 201 is exposed, the display 201 and the front plate 202 may be formed to have substantially the same interval between peripheries thereof. In an embodiment, a recess or an opening may be formed at a portion of a screen display region of the display 201, and other electronic components, for example, the first camera module 205 and a proximity sensor or illuminance sensor (not shown) which are aligned with the recess or the opening, may be included.

In an embodiment, the display 201 may be disposed adjacent to or joined with a touch sensing circuit, a pressure sensor capable of measuring touch strength (pressure), and/or a digitizer for detecting a magnetic-type stylus pen.

In an embodiment, the audio module 107 may include a microphone hole 203, at least one speaker hole 207, and a communication receiver hole 214. The microphone hole 203 may have a microphone disposed inside thereof to acquire external sound, and in an embodiment, may have a plurality of microphones disposed to sense a sound direction. In an embodiment, the at least one speaker hole 207 and the communication receiver hole 214 may be implemented as one hole together with the microphone hole 203, or the speaker (e.g., a piezo speaker) may be included without the at least one speaker hole 207 and the communication receiver hole 214.

In an embodiment, the electronic device 101 may include the sensor module 204 to generate an electrical signal or data value corresponding to an internal operational state of the electronic device 101 or an external environmental state. The sensor module 204 may further include a proximity sensor disposed adjacent to the first face 210A of the housing 220, a fingerprint sensor disposed integrally or adjacent to the display 201, and or a biometric sensor (e.g., a Heart Rate Monitoring (HRM) sensor) disposed to the second face 210B of the housing 220. The electronic device 101 may further include at least one of senor modules (not shown), for example, a gesture sensor, a gyro sensor, an atmospheric pressure sensor, a magnetic sensor, an acceleration sensor, a grip sensor, a color sensor, an Infrared (IR) sensor, a biometric sensor, a temperature sensor, a humidity sensor, and an illuminance sensor.

In an embodiment, the electronic device 101 may include a second camera module 255 disposed to the second face 210B. The first camera module 205 and the second camera module 255 may include one or more lenses, an image sensor, and/or an image signal processor. A flash (not shown) may be disposed to the second face 210B. The flash may include, for example, a Light Emitting Diode (LED) or a xenon lamp. In an embodiment, at least two or more lenses (infrared cameras, wide-angle and telephoto lenses) and image sensors may be disposed to a face of the electronic device 101.

In an embodiment, the key input device 217 may be disposed to the side face 210C of the housing 220. In an embodiment, the electronic device 101 may not include the entirety or part of the aforementioned key input device 217. The key input device 217, which is not included, may be implemented on the display 201 in a different form such as a soft key or the like. In an embodiment, the key input device may include at least part of the fingerprint sensor disposed to the second face 210B of the housing 220.

In an embodiment, the connector holes 208 and 209 may include the first connector hole 208 capable of accommodating a connector (e.g., a USB connector) for transmitting/receiving power and/or data with respect to an external electronic device, and/or the second connector hole (e.g., earphone jack) 209 capable of accommodating a connector for transmitting/receiving an audio signal with respect to the external electronic device.

Although it is illustrated in FIG. 2 and FIG. 3 that the electronic device 101 corresponds to a bar-type, this is only an example, and the electronic device 101 may correspond to various types of devices in practice. For example, the electronic device 101 may correspond to a foldable device, a slidable device, a wearable device (e.g., a smartwatch, a wireless earphone), or a tablet PC. Therefore, technical ideas disclosed in the disclosure are not limited to the bar-type device illustrated in FIG. 2 and FIG. 3, and may be applied to various types of devices.

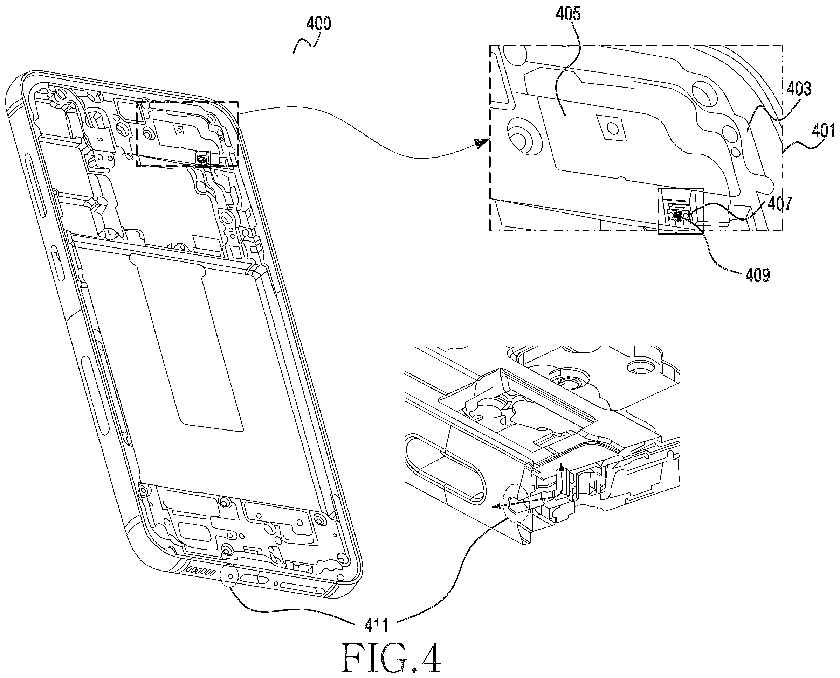

FIG. 4 illustrates a speaker device 401 located inside an electronic device 400 according to an embodiment.

In an embodiment, the electronic device 400 may include a speaker device 401 and a vent hole 411. For example, the electronic device 400 may correspond to the electronic device 101 of FIG. 1. For example, the speaker device 401 may include a speaker, a first frame 403, a second frame 405, a printed circuit board 407, and an opening 409 included in the printed circuit board 407.

In an embodiment, one or more speaker devices 401 may be provided in the electronic device 400. For example, the speaker device 401 may be located at an upper end of the electronic device 400. For example, the speaker device 401 may be located at a lower end of the electronic device 400. For example, the speaker device 401 may be located at each of the upper end and lower end of the electronic device 400. For example, although one or more speaker devices 401 may be provided at the upper end of the electronic device 401, the disclosure is not limited thereto.

In an embodiment, the speaker device 401 may include a frame. For example, the frame may include at least one of a first frame 403 and a second frame 405. For example, the first frame 403 may accommodate a speaker. For example, in a state where the speaker is disposed to the frame, an empty space may be formed between the speaker and a support member. When the space is not formed between the speaker and the support member, a sound is also generated at an opposite side of a sound output path for outputting the sound from the speaker due to a vibration of a diaphragm included in the speaker, which may result in deterioration of sound quality of the sound output by the electronic device 400. For example, the first frame 403 may form a resonance space in which a sound wave generated from the speaker may resonate, together with the second frame 405. The resonance space may also be referred to as a back volume. For example, the first frame 403 and the second frame 405 may maintain a form and shape due to the support member (not shown) of the electronic device 400. For example, the second frame 405 may include an opening capable of emitting the sound wave generated from the speaker.

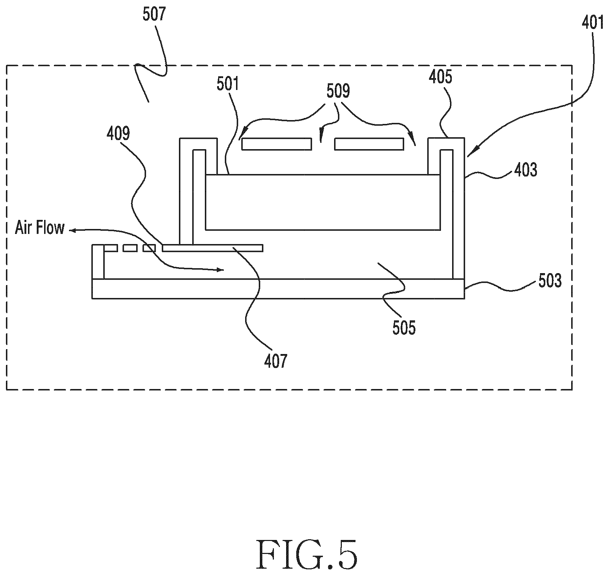

In an embodiment, the speaker device 401 may include the printed circuit board 407. For example, the printed circuit board 407 may include a flexible printed circuit board. For example, the printed circuit board 407 may include a rigid printed circuit board. A speaker included in the speaker device 401 may be operatively coupled to the processor 120 through the printed circuit board 407. The processor 120 may be disposed to a main board (e.g., the support member 503 of FIG. 5). For example, the printed circuit board 407 may be coupled to the main board through a connector (e.g., a C-clip). The printed circuit board 407 may include a circuit to be coupled to the processor 120 through the main board. The printed circuit board 407 may control the speaker, under the control of the processor 120. For example, the processor 120 may transmit a signal for controlling the speaker through the printed circuit board 407, or may receive a signal from the speaker. The printed circuit board 407 may be coupled to the support member and/or the frame. For example, the printed circuit board 407 may be attached at least in part to the support member or the frame, or may be coupled through the connector.

In an embodiment, the printed circuit board 407 may include at least one opening 409. Since the printed circuit board 407 including the at least one opening 409 is used without having to use a process of forming an additional structure for ventilation, manufacturing cost may be reduced. The at least one opening 409 allows air to flow between the resonance space inside the speaker device 401 and the housing inner space, thereby reducing an atmospheric pressure difference of spaces at both sides of the diaphragm included in the speaker device 401. For example, the at least one opening 409 may include at least one fine hole. Since the at least one opening 409 is implemented as the fine hole, the atmospheric pressure difference at both sides of the diaphragm included in the speaker device 401 may be reduced while maintaining a function of the resonance space.

In an embodiment, the electronic device 400 may include a vent hole 411. For example, the vent hole 411 allows the air to flow inside/outside the housing, thereby maintaining the atmospheric pressure of the speaker device 401 to be a constant level. For example, the vent hole 411 may be provided additionally in the electronic device 400. For example, the vent hole 411 may be disposed without being limited to a position, including front, rear, and side faces of the electronic device 400. For example, the vent hole 411 may include an opening formed on the housing 220 of the electronic device 400. For example, the vent hole 411 may include at least one of the microphone hole 203, the at least one speaker hole 207, the first connector hole 207, and the second connector hole 209 of the electronic device 101 of FIG. 1.

FIG. 5 is a cross-sectional view conceptually illustrating the speaker device 401 according to an embodiment.

In an embodiment, the speaker device 401 may include a speaker 501, the first frame 403, the second frame 405, a support member 503, the printed circuit board 407, and the at least one opening 409. A resonance space 505 in which a sound wave generated from the speaker 501 may resonate may be formed by the first frame 403, the second frame 405, and the support member 503. For example, a space between the speaker device 401 and the electronic device 400 may be an inner space 507 of the housing. Air inside the speaker device 401 may flow to the inner space 507 of the housing.

In an embodiment, the speaker 501 may be formed in a space formed by the first frame 403, second frame, and support member 503 of the electronic device 400. For example, the formed space may include the resonance space 505 in which the sound wave generated from the speaker 501 may resonate. For example, when the space between the speaker 501 and the support member 505 is narrow, quality of the speaker 501 may be degraded due to the generation of the sound wave. A frame may be constructed of the first frame 403 and the second frame 405. For example, the first frame 403 may accommodate the speaker 501, and the second frame 405 may include the opening 509 to emit the sound wave generated from the speaker 501. However, the disclosure is not limited thereto. For example, the frame may be constructed of a single component.

In an embodiment, the printed circuit board 407 may be disposed such that the resonance space 505 is blocked in part from the housing inner space 507. For example, one face of the printed circuit board 407 may be coupled to the support member 503, and the other face may be coupled to the first frame 403 and/or the speaker 501. The printed circuit board 407 may be operatively coupled to the processor 120 and the speaker 501. For example, the processor 120 may control the speaker 501 through the printed circuit board 407. For example, the processor 120 may transmit a signal for controlling the speaker 501 through the printed circuit board 407, or may receive a signal from the speaker 501.

In an embodiment, the printed circuit board 407 may include the at least one opening 409. An air flow between the resonance space 505 and the housing inner space 507 may be achieved through the at least one opening 409. For example, an atmospheric pressure difference inside/outside the speaker device 401 may be adjusted through the air flow. For example, the speaker 501 may be prevented from being damaged through the adjustment of the atmospheric pressure difference. For example, when the at least one opening 409 is not provided, a pressure applied to the diaphragm of the speaker 501 may cause a damage to the diaphragm in an environment where the atmospheric pressure difference is great.

In an embodiment, the at least one opening 409 may include at least one fine opening. When the at least one opening 409 which couples the resonance space 505 and the housing inner space 507 has a great size, a function of the resonance space 505 may deteriorate. Therefore, the at least one opening 409 may be formed to have a fine size. In an embodiment, the fine opening is formed through a process of forming a through-hole on the printed circuit board 407, thereby reducing manufacturing cost. For example, since at least one fine opening may be formed in a process of manufacturing the printed circuit board 407 instead of using an additional process or providing the at least one opening 409 at an additional position, manufacturing cost may be reduced.

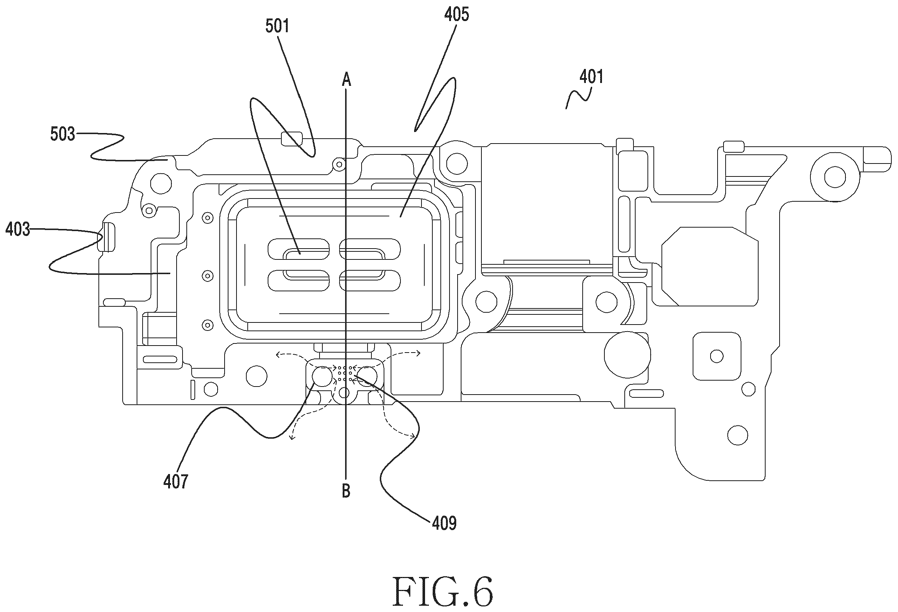

FIG. 6 illustrates the speaker device 401 according to an embodiment.

In an embodiment, the speaker device 401 may include a speaker 501, the first frame 403 and second frame 405 accommodating the speaker, a support member 503 supporting the first frame 403 and second frame 405, and the printed circuit board 407 including at least one opening 409.

In an embodiment of the disclosure, the speaker device 401 may be located inside the housing 220 of the electronic device 400. For example, the speaker device 401 may be located at a rear portion of the housing 220. For example, the speaker device 401 may be located in a back volume space. For example, the speaker device 401 may be disposed at a location close to at least one of the microphone hole 203, the at least one speaker hole 207, the first connector hole 209, and the second connector hole 209, formed on the housing 220. For example, at least one or more speaker devices 401 may be provided in the electronic device 400. For example, the speaker device 401 may be located at an upper portion and/or lower portion of the electronic device 400, but the disclosure is not limited thereto.

In an embodiment of the disclosure, the support member 503 may serve to support the speaker device 401. The support member 503 may be coupled to the first frame 403. For example, the support member 503 may be attached to the first frame 403, or may be coupled through a connector. The support member 503 may support the printed circuit board 407. For example, the support member 503 and the printed circuit board 407 may be coupled in an adhesive manner, or may be coupled through the connector. The support member 503 may form an inner space of the speaker device 401 together with the first frame 403, the second frame 405, and the printed circuit board 407. For example, the inner space of the speaker device 401 may include the resonance space 505 (or a back volume space).

In an embodiment of the disclosure, a frame of the speaker device 401 may include the first frame 403 and the second frame 405. The frame may form a space capable of accommodating the speaker 501 inside the speaker device 401. For example, the space capable of accommodating the speaker 501 may be the resonance space 505 in which a sound wave generated from the speaker 501 resonates. For example, the resonance space 505 of the speaker device 401 may be the back volume space due to the frame. For example, since the back volume space is formed, quality of sound output by the electronic device 400 may not deteriorate.

In an embodiment of the disclosure, the printed circuit board 407 may be located between the resonance space 505 and the inner space 507 of the housing 220. For example, the printed circuit board 407 may include a flexible printed circuit board. For example, the printed circuit board 407 may include a rigid printed circuit board. For example, the printed circuit board 407 may block at least part of the resonance space 505 and the housing inner space 507. For example, one end of the printed circuit board 407 may be located in the speaker 501 accommodated inside the resonance space 505. The other end of the printed circuit board 407 may be located in at least part of the support member 503 located in the inner space of the housing 220. For example, one end of the printed circuit board 407 may be electrically coupled to the speaker 501. For example, the other end of the printed circuit board may be coupled to the support member 503 either in an adhesive manner or an electrical coupling manner (e.g., a connector).

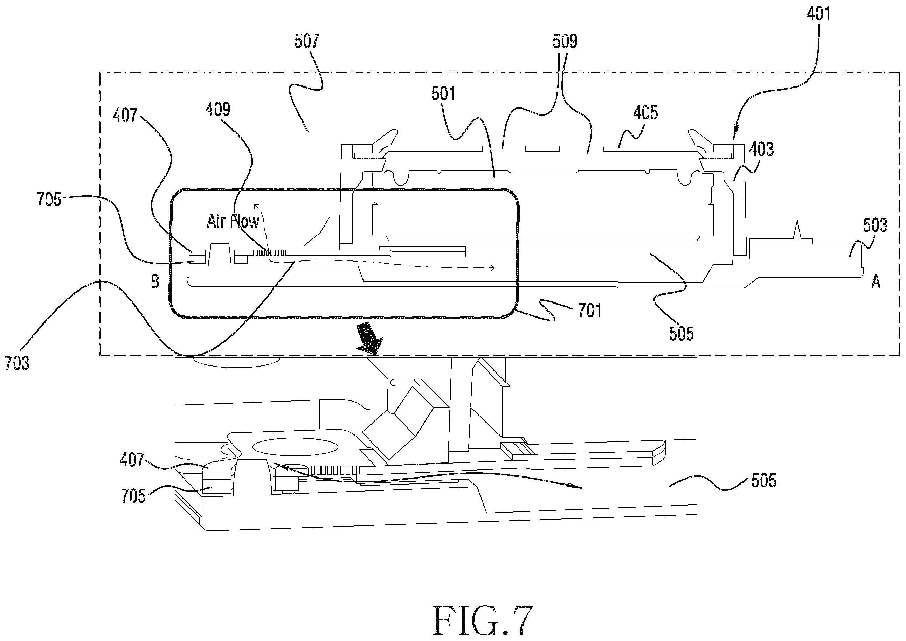

In an embodiment of the disclosure, the printed circuit board 407 may include the at least one opening 409 which couples the resonance space 505 and an outer space, such as the housing inner space. For example, an air flow between the resonance space 505 and the outside may be achieved through the at least one opening 409. For example, an atmospheric pressure inside the speaker device 401 may be maintained to be a constant level due to the air flow. The at least one opening 409 may include at least one fine opening. For example, the atmospheric pressure inside the speaker device 401 may be finely adjusted by using the at least one fine opening. The at least one fine opening may be formed on the printed circuit board 407. For example, the at least one fine opening may be formed through a process of forming a through-hole on the printed circuit board 407. FIG. 7 is a cross-sectional view illustrating the cross-section A-B of FIG. 6.

In an embodiment of the disclosure, FIG. 7 illustrates a cross-section of the speaker device 401 of FIG. 6, taken along the line A-B. The speaker device 401 may include the support member 503, the first frame 403, the second frame 405, the speaker 501, and the printed circuit board 407 included in a ventilation structure 701, the at least one opening 409 formed on the printed circuit board 407, a reinforcement member 705 for supporting the printed circuit board 407, and a conduit portion 703 which is a passage through which external air flows.

In an embodiment of the disclosure, a frame may be coupled to the support member 503 and the printed circuit board 407 to form an inner space of the speaker device 401. The inner space of the speaker device 401 may include the resonance space 505 in which a sound wave generated from the speaker 501 may resonate. For example, a space inside the speaker device 401, formed by the frame, may include a back volume space which cancels out a sound wave generated at a rear face of the speaker 501. The frame may include the first frame 403 and/or the second frame 405. For example, at least part of the first frame 403 located at a side A may be supported by the support member 503 by being attached to the support member 503. For example, the first frame 403 at a side B may be attached to the printed circuit board 407. For example, the printed circuit board 407 may be supported by the reinforcement member 705 attached to the support member 503 at the side B. For example, the reinforcement member 705 may be attached to the support member 503 at the side B. The second frame 405 may be coupled to the first frame 405 to form the resonance space 505 inside the speaker device 401. The second frame 405 may include the at least one opening 509. For example, the sound wave generated from the speaker 501 may be emitted through the opening 509 formed on the second frame 405. The electronic device (e.g., the electronic device 101 of FIGs. 1 to 3) may include an acoustic path through which the sound wave emitted from the speaker 501 is output to the outside.

In an embodiment of the disclosure, the speaker device 401 may include the ventilation structure 701. For example, the ventilation structure 701 may include the at least one opening 409 formed on the printed circuit board 407, and the conduit portion 703 including a conduit corresponding to a shape in which the reinforcement member 705 for supporting the printed circuit board 407 is removed at least in part. For example, the conduit may be formed additionally between the support member 503 and the printed circuit board 407 without having to be formed by removing the reinforcement member 705. For example, the conduit may couple the resonance space 505 from the at least one opening 409 between the printed circuit board 407 and the support member 503. For example, the conduit of the conduit portion 703 may be an air flow passage through which external air flows through the at least one opening 409 formed on the printed circuit board 407. For example, the at least one opening 409 may include at least one fine opening formed through a through-hole process of producing a through-hole on the printed circuit board 407. For example, the through-hole process may include a process of producing a via hole by irradiating a laser to the printed circuit board 407. Since the through-hole process is a process capable of producing a small-sized through-hole on the printed circuit board 407, at least one opening may be formed through the through-hole process performed in a process of manufacturing the printed circuit board 407. The at least one fine opening may be formed in a region corresponding to the conduit portion 703 inside the printed circuit board 407. For example, an atmospheric pressure inside the speaker device 401 may be adjusted due to the at least one fine opening.

In an embodiment of the disclosure, one face of the printed circuit board 407 may be coupled to the support member 503. The other face of the printed circuit board 407 may be coupled to the speaker 501. For example, the printed circuit board 407 may be coupled to the support member 503 at the side B through the reinforcement member 705 for supporting the printed circuit board. For example, the printed circuit board 407 may be electrically coupled to the speaker 501 to supply power or to transfer a signal for controlling the speaker. For example, the printed circuit board 407 may be operatively coupled to the at least one processor 120. For example, the at least one processor 120 may transmit a signal for controlling the speaker 501 through the printed circuit board 407, or may receive a signal from the speaker. For example, the printed circuit board 407 may include a flexible printed circuit board. For example, the printed circuit board 407 may include a rigid printed circuit board.

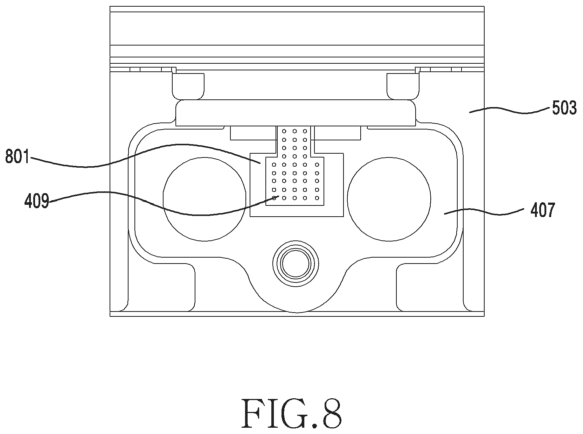

FIG. 8 illustrates an upper face of the printed circuit board 407 according to an embodiment.

In an embodiment of the disclosure, FIG. 8 illustrates an upper face of the support member 503 of the speaker device 401 and the printed circuit board 407 attached to the support member 503. The printed circuit board 407 may include the at least one opening 409 and a dummy pattern 801. For example, the printed circuit board 407 may include a flexible printed circuit board. For example, the printed circuit board 407 may include a rigid printed circuit board. For example, the printed circuit board 407 may be attached to the support member 503 through the reinforcement member 705 for supporting the printed circuit board 407 of FIG. 8. For example, the printed circuit board 407 may include the at least one opening 409 configured such that air from the resonance space 505 inside the speaker device 401 passes therethrough. For example, the at least one opening may include at least one fine opening. For example, the at least one fine opening may be formed on the printed circuit board 407 through a through-hole process. For example, since the at least one fine opening allows the air to flow into or out of the resonance space 505 with a change in an external atmospheric pressure, an atmospheric pressure difference between inside and outside the speaker device 401 increases, thereby preventing a diaphragm of the speaker from being damaged. In addition, a size of the at least one fine opening is limited to restrict the outflow of the sound wave from the resonance space 505, thereby maintaining a function of the resonance space 505.

In an embodiment of the disclosure, since the reinforcement member 705 attached to the printed circuit board 407 is removed at least in part to form the conduit portion 703 including a conduit which may be included in the ventilation structure 701, rigidity of a region of the printed circuit board 407 corresponding to a region in which the reinforcement member 705 is removed may be weaken. For example, in order to ensure the rigidity of the region of the printed circuit board 407 corresponding to the region in which the reinforcement member 705 is removed, the printed circuit board 407 may include the dummy pattern 801

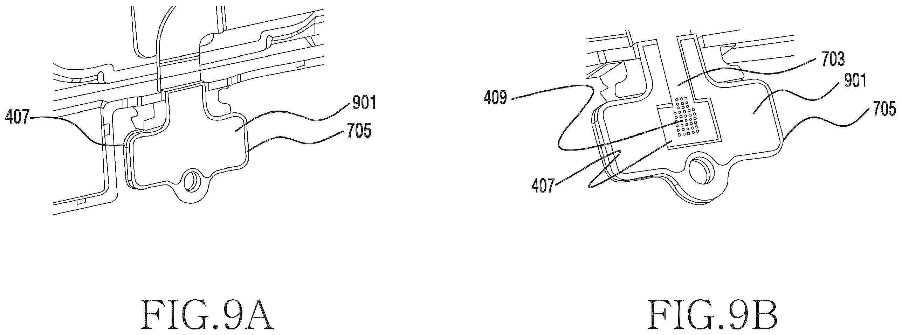

FIGs. 9A and 9B illustrate a lower face of the printed circuit board 407 according to an embodiment.

In an embodiment of the disclosure, FIG. 9A may illustrate the printed circuit board 407 in a state where at least some regions of the reinforcement member 705 attached to the printed circuit board 407 are not removed. For example, the printed circuit board 407 may include a flexible printed circuit board. For example, the printed circuit board 407 may include a rigid printed circuit board. The printed circuit board 407 may include the reinforcement member 705 and an adhesive tape 901. For example, the reinforcement member 705 may be attached to the lower face of the printed circuit board 407 to support the printed circuit board 407. For example, the reinforcement member 705 may be attached to the support member 503 to support the printed circuit board 407. For example, the adhesive tape 901 may be formed in a region corresponding to a shape of the reinforcement member 705. For example, the adhesive tape 901 may seal between the reinforcement member 705 and the support member 503. For example, a reason why the adhesive tape 901 seals between the reinforcement member 705 and the support member 503 may be to prevent the outflow of air from the inside of the speaker device 401 in a portion other than the at least one opening 409. For example, the adhesive tape 901 may be attached to the printed circuit board 407 not having the reinforcement member 705.

In an embodiment of the disclosure, FIG. 9B may illustrate the printed circuit board 407 in a state where at least some regions of the reinforcement member 705 attached to the printed circuit board 407 are removed. For example, the at least some regions of the reinforcement member 705 may be removed to form the conduit portion 703 including a conduit through which external air may flow in the ventilation structure 701. The external air may flow through the at least one opening 409 formed on the printed circuit board 407. For example, the at least one opening 409 may include at least one fine opening. For example, the at least one fine opening may be formed on the printed circuit board 407 through a through-hole process. For example, the at least one fine opening may be formed in a region corresponding to the conduit portion 703. The conduit portion 703 may include a conduit which couples the resonance space 505 from the at least one opening 409 between the printed circuit board 407 and the support member 503. The adhesive tape 901 may be formed in a region corresponding to a shape of the reinforcement member 705. For example, the region corresponding to the shape of the reinforcement member may be a region corresponding to the shape in which the reinforcement member 705 is removed at least in part due to the formation of the conduit portion 703. For example, the adhesive tape 901 may seal between the reinforcement member 705 and the support member 503 to prevent the outflow of air from a portion other than the at least one fine opening.

In an embodiment, the reinforcement member 705 may form the conduit portion 703 having a shape different from the shape illustrated in FIG. 9B. For example, the reinforcement member 705 may include a conduit which penetrates inside the reinforcement member 705 having the shape illustrated in FIG. 9A. For example, the reinforcement member 705 may include a groove formed at part of a thickness of the shape corresponding to the conduit portion 703 having the shape illustrated in FIG. 9A.

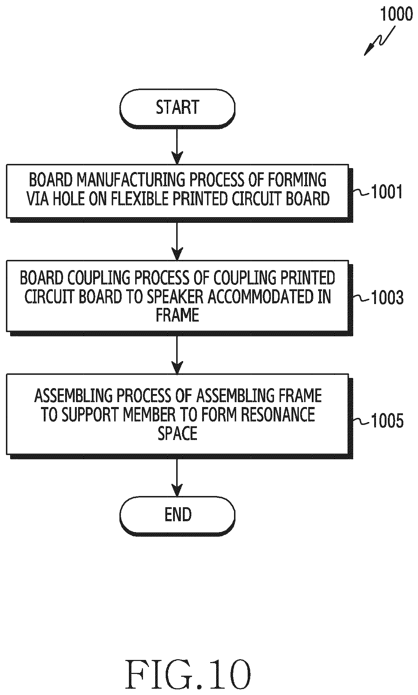

FIG. 10 is a flowchart 1000 illustrating a process of manufacturing an electronic device (e.g., the electronic device 101 of FIGs. 1 to 3, the electronic device 400 of FIG. 4) or a speaker device (e.g., the speaker device 401 of FIG. 4) according to an embodiment.

In an embodiment of the disclosure, a method of manufacturing the electronic device (e.g., the electronic device 101 of FIGs. 1 to 3) or the speaker device (e.g., the speaker device 401 of FIG. 4) may include a board manufacturing process 1001 in which a via hole (e.g., the opening 409) is formed on the printed circuit board 407. For example, the printed circuit board 407 may include a flexible printed circuit board. For example, the printed circuit board 407 may include a rigid printed circuit board. The via hole may be formed on the printed circuit board 407 to couple a conductive wire disposed to the printed circuit board 407. For example, the via hole may be formed to couple upper and lower faces of the printed circuit board 407 by using the conductive wire. For example, the via hole may be formed on the printed circuit board 407 to electrically couple the upper and lower faces of the printed circuit board 407 by applying a conductive material to the printed circuit board 407. The via hole may be formed by a through-hole process in which a through-hole is formed on the printed circuit board 407. For example, the process of forming the through-hole may be a process in which at least one via hole is formed on the printed circuit board 407 by applying a laser to the printed circuit board 407. For example, the process of forming the through-hole may be a process in which at least one via hole is physically formed on the printed circuit board 407.

In an embodiment of the disclosure, in the method of manufacturing the electronic device (e.g., the electronic device 101 of FIGs. 1 to 3) or the speaker device (e.g., the speaker device 401 of FIG. 4), the board manufacturing process 1001 of forming the via hole on the printed circuit board 407 may include a process of forming the at least one opening 409. For example, the via hole formed on the printed circuit board 407 may be at least one opening. Since the process of manufacturing the at least one opening 409 is included in the process of manufacturing the printed circuit board 407, manufacturing cost may be reduced. An air flow may be possible inside the speaker device 401 through the at least one opening 409. For example, external air may flow between the inner space of the housing 220 and the resonance space 505 of the speaker device 401 through the at least one opening 409. The at least one opening 409 may include at least one fine opening. For example, the at least one fine opening may be formed by using a process of forming a through-hole of the printed circuit board. For example, the process of forming the through-hole may be a process of applying a laser to the printed circuit board 407. Since the at least one fine opening is formed, an internal atmospheric pressure of the speaker device 401 may be maintained to be a specific level.

In an embodiment of the disclosure, the method of manufacturing the electronic device (e.g., the electronic device 101 of FIGs. 1 to 3) or the speaker device (e.g., the speaker device 401 of FIG. 4) may include a board coupling process 1003 in which a printed circuit board is coupled to a speaker accommodated in a frame. The printed circuit board 407 may be disposed to block in part between the resonance space 505 and the inner space of the housing 220. For example, one end of the printed circuit board 407 may be coupled to the speaker 501 by penetrating the first frame 403. For example, the other end of the printed circuit board 407 may be attached to the support member 503. The processor 120 may control the speaker 501 through the printed circuit board 407. For example, the printed circuit board 407 may be electrically coupled to the speaker 501 to supply external power or control a signal. For example, the processor 120 may transmit a signal for controlling the speaker 501 or receive a signal from the speaker 501 through the printed circuit board 407.

In an embodiment of the disclosure, the method of manufacturing the electronic device (e.g., the electronic device 101 of FIGs. 1 to 3) or the speaker device (e.g., the speaker device 401 of FIG. 4) may include an assembling process 1005 in which the frame is assembled to a support member to form a resonance space. The assembling process in which the frame is assembled to the support member 503 may be included to form the resonance space 505 in which a sound wave generated from the speaker 501 resonates due to the speaker 501 and the printed circuit board 407. One side of the support member 503 may be coupled to the first frame 403. For example, the support member 503 may be coupled to the first frame 403 to support a space capable of accommodating the speaker 501. For example, the space capable of accommodating the speaker 501 may be the resonance space 505. For example, the space capable of accommodating the speaker 501 may be a back volume space. Due to the back volume space, sound generated from the speaker 501 may be prevented from quality deterioration. The other end of the support member 503 may be attached to the printed circuit board 407. For example, the support member 503 may support the printed circuit board 407.

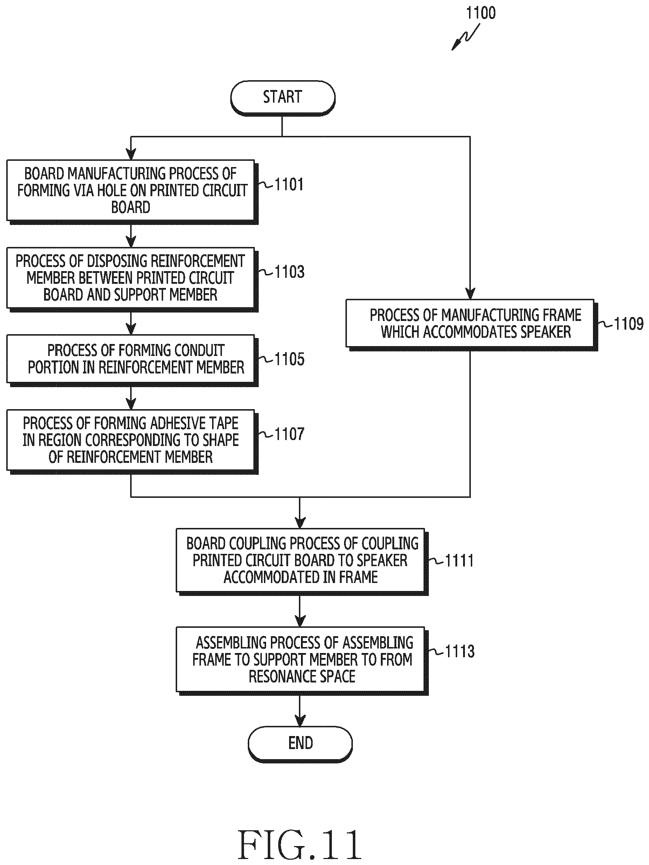

FIG. 11 is a flowchart 1100 illustrating a process of manufacturing an electronic device (e.g., the electronic device 101 of FIGs. 1 to 3, the electronic device 400 of FIG. 4) or a speaker device (e.g., the speaker device 401 of FIG. 4) according to an embodiment.

In an embodiment of the disclosure, a method of manufacturing the electronic device (e.g., the electronic device 101 of FIGs. 1 to 3, the electronic device 400 of FIG. 4) or the speaker device (e.g., the speaker device 401 of FIG. 4) may include a board manufacturing process 1101 in which a via hole is formed on the printed circuit board 407. For example, the board manufacturing process 1101 may correspond to the aforementioned process 1001 of FIG. 10. For example, the printed circuit board 407 may include a flexible printed circuit board. For example, the printed circuit board 407 may include a rigid printed circuit board.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include a process 1103 in which the reinforcement member 705 is disposed between the printed circuit board 407 and the support member 503. The reinforcement member 705 may support the printed circuit board 407. For example, one face of the reinforcement member 705 may be attached to the support member 503. For example, the reinforcement member 705 may be attached to the printed circuit board 407. The reinforcement member 705 may be disposed to a region corresponding to the printed circuit board. The printed circuit board 407 may include, at least in part, a dummy pattern including a conductive pattern in a region corresponding to a region in which the conduit portion 703 is disposed. For example, the reinforcement member 705 may be removed at least in part due to the formation of the conduit portion 703. For example, the dummy pattern including the conductive pattern may be attached to the region corresponding to the conduit portion 703 to ensure rigidity of the printed circuit board 407 which is weakened due to the formation of the conduit portion 703.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include a process 1105 in which the conduit portion 703 is formed in the reinforcement member 705. The conduit portion 703 may be formed by using the reinforcement member 705. For example, the conduit portion 703 may be formed by removing at least some regions of the reinforcement member 705. For example, the process 1105 may include a process in which the conduit portion 703 coupling the resonance space 505 from the at least one opening 409 between the printed circuit board 407 and the support member 503 is formed in the reinforcement member 705. The conduit portion 703 may include a conduit. For example, external air introduced through the at least one opening 409 may flow through the conduit. The external air may flow from the inside of the housing 220 to the resonance space 505. Since the conduit is used, the external air may be prevented from being rapidly introduced.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include a process 1107 in which the adhesive tape 901 is formed in a region corresponding to a shape of the reinforcement member 705. The adhesive tape 901 may be formed in the region corresponding to the shape of the reinforcement member 705. For example, the region corresponding to the shape of the reinforcement member 705 may be a region corresponding to the shape in which the reinforcement member 705 is removed at least in part due to the conduit portion 703. The adhesive tape 901 may seal between the reinforcement member 705 and the support member 503. For example, a reason why the adhesive tape 901 seals between the support member 503 and the reinforcement member 705 may be to prevent the inflow or outflow of air in a space other than the at least one opening 409. For example, since the external air is allowed to flow in/out only through the at least one opening 409, a pressure in an inner space of the speaker device 401 may be maintained to be a constant level.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include a process 1109 of manufacturing a frame which accommodates the speaker 501. The frame may include the first frame 403 and/or the second frame 405. A space capable of accommodating the speaker 501 may be formed by the frame. For example, the space capable of accommodating the speaker 501 may be the resonance space 505 in which at least part of a sound wave generated from the speaker 501 may resonate. For example, one face of the first frame 403 may be coupled to the support member 503. For example, the other face of the first frame 403 may be coupled to the second frame 405. For example, the second frame 405 may include the at least one opening 509 capable of emitting the sound wave generated from the speaker 501. For example, the first frame 403 may be penetrated at least in part by the printed circuit board 407. For example, the first frame 403 may be coupled at least in part to the printed circuit board 407.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include a board coupling process 1111 in which the printed circuit board 407 is coupled to the speaker 501 accommodated in a frame. For example, the board coupling process 1111 may correspond to the aforementioned process 1103 of FIG. 10.

In an embodiment of the disclosure, the method of manufacturing the electronic device (e.g., the electronic device 101 of FIGs. 1 to 3, the electronic device 400 of FIG. 4) or the speaker device (e.g., the speaker device 401 of FIG. 4) may include an assembling process 1113 in which the frame is assembled to the support member 503 to form the resonance space 505. For example, the assembling process 1113 may correspond to the aforementioned process 1005 of FIG. 10.

In the aforementioned flowchart illustrating the process of manufacturing the electronic device of FIG. 10 and FIG. 11 (e.g., the electronic device 101 of FIGs. 1 to 3, the electronic device 400 of FIG. 4) or the speaker device (e.g., the speaker device 401 of FIG. 4), operations may be performed sequentially. However, without being limited to the illustrated order, several operations may be performed simultaneously.

Problems to be solved according to an embodiment of the disclosure may be as follows.

According to a comparative embodiment, in case of a mesh-type vent hole structure, there is an advantage in that fine ventilation is used to finely adjust an atmospheric pressure difference inside/outside a speaker device, but a vent hole may be included at an additional position. In addition, in case of a conduit-type vent hole, it is not necessary to provide the vent hole at the additional position, but it may be difficult to finely adjust the atmospheric pressure difference since a conduit has a significantly wide cross-sectional area. Therefore, according to an embodiment of the disclosure, an opening is formed on a printed circuit board without having to be attached to an additional position, and a conduit having small cross-sectional area may be formed to couple to a resonance space in which a speaker is accommodated on the printed circuit board.

According to an embodiment of the disclosure, since an opening may be formed through a process of forming a through-hole on a flexible printed circuit board, an additional process is not required, thereby reducing manufacturing cost. The opening is not necessarily attached to an additional position since it is formed on the printed circuit board, thereby increasing convenience.

According to an embodiment of the disclosure, an electronic device (e.g., the electronic device 101 of FIGs. 1 to 3, the electronic device 400 of FIG. 4) may include a housing (e.g., the housing 220 of FIG. 2). A speaker (e.g., the speaker 501 of FIG. 5) may be disposed inside a housing (e.g., the housing 220 of FIG. 2) of the electronic device (e.g., the electronic device 101 of FIGs. 1 to 3, the electronic device 400 of FIG. 4). The electronic device (e.g., the electronic device 101 of FIGs. 1 to 3, the electronic device 400 of FIG. 4) may include a frame (e.g., the first frame 403 and second frame 405 of FIG. 4) accommodating the speaker (e.g., the speaker 501 of FIG. 5), and forming a resonance space (e.g., the resonance space 505 of FIG. 5) in which a sound wave generated from the speaker (e.g., the speaker 501 of FIG. 5) resonates. The electronic device (e.g., the electronic device 101 of FIGs. 1 to 3, the electronic device 400 of FIG. 4) may include a printed circuit board (e.g., the printed circuit board 407 of FIG. 4) coupled to the speaker (e.g., the speaker 501 oaf FIG. 5), and disposed to block at least in part between the resonance space (e.g., the resonance space 505 of FIG. 5) and an inner space of the housing (e.g., the housing inner space 507 of FIG. 5). The printed circuit board (e.g., the printed circuit board 407 of FIG. 4) may include at least one opening (e.g., the at least one opening 409 of FIG. 4) which couples the resonance space (e.g., the resonance space 505 of FIG. 5) and the outer space, such as the housing inner space.

According to an embodiment of the disclosure, in the electronic device (e.g., the electronic device 101 of FIGs. 1 to 3, the electronic device 400 of FIG. 4), the printed circuit board (e.g., the printed circuit board 407 of FIG. 4) may include a flexible printed circuit board. The electronic device (e.g., the electronic device 101 of FIGs. 1 to 3, the electronic device 400 of FIG. 4) may further include a reinforcement member (e.g., the reinforcement member 705 of FIG. 7) for supporting the flexible printed circuit board.

According to an embodiment of the disclosure, the electronic device (e.g., the electronic device 101 of FIGs. 1 to 3, the electronic device 400 of FIG. 4) may further include a support portion (e.g., the support member 503 of FIG. 5) which supports the frame (e.g., the first frame 403 and second frame 405 of FIG. 4). The reinforcement member (e.g., the reinforcement member 705 of FIG. 7) may have one face attached to the flexible printed circuit board (e.g., the printed circuit board 407 of FIG. 4) and the other face attached to the support portion (e.g., the support member 503 of FIG. 5). The reinforcement member (e.g., the reinforcement member 705 of FIG. 7) may include a conduit portion (e.g., the conduit portion 703 of FIG. 7) forming a conduit which couples the resonance space (e.g., the resonance space 505 of FIG. 5) from the at least one opening (e.g., the at least one opening 409 of FIG. 5) between the flexible printed circuit board (e.g., the printed circuit board 407 of FIG. 4) and the support portion (e.g., the support member 503 of FIG. 5).

According to an embodiment of the disclosure, the flexible printed circuit board (e.g., the printed circuit board 407 of FIG. 4) may further include a dummy pattern (e.g., the dummy pattern 801 of FIG. 8) including a conductive pattern formed at least in part in a region corresponding to a region in which the conduit portion (e.g., the conduit portion 703 of FIG. 7) is disposed.

According to an embodiment of the disclosure, the at least one opening (e.g., the at least one opening 409 of FIG. 4) may include at least one fine opening produced in a process of forming a through-hole of the flexible printed circuit board (e.g., the printed circuit board 407 of FIG. 4).

According to an embodiment of the disclosure, the at least one fine opening may be formed in a region corresponding to the conduit portion (e.g., the conduit portion 703 of FIG. 7) inside the flexible printed circuit board (e.g., the printed circuit board 407 of FIG. 4).

According to an embodiment of the disclosure, the electronic device (e.g., the electronic device 101 of FIGs. 1 to 3, the electronic device 400 of FIG. 4) may further include at least one processor (e.g., the processor 120 of FIG. 1) electrically coupled to the speaker (e.g., the speaker 501 of FIG. 5) through the printed circuit board (e.g., the printed circuit board 407 of FIG. 4). The at least one processor (e.g., the processor 120 of FIG. 1) may transmit a signal for controlling the speaker (e.g., the speaker 501 of FIG. 5) through the printed circuit board (e.g., the printed circuit board 407 of FIG. 4), or may receive a signal from the speaker (e.g., the speaker 501 of FIG. 5).

According to an embodiment of the disclosure, the resonance space (e.g., the resonance space 505 of FIG. 5) in which the sound wave generated from the speaker (e.g., the speaker 501 of FIG. 5) resonates may be a back volume space of the frame (e.g., the first frame 403 and second frame 405 of FIG. 4).

According to an embodiment of the disclosure, the electronic device (e.g., the electronic device 101 of FIGs. 1 to 3, the electronic device 400 of FIG. 4) may further include an adhesive tape (e.g., the adhesive tape 901 of FIG. 9) formed in a region corresponding to a shape of the reinforcement member (e.g., the reinforcement member 705 of FIG. 7).

According to an embodiment of the disclosure, the adhesive tape (e.g., the adhesive tape 901 of FIG. 9) may seal between the reinforcement member (e.g., the reinforcement member 705 of FIG. 7) and the support portion (e.g., the support member 503 of FIG. 5). The region corresponding to the shape of the reinforcement member (e.g., the reinforcement member 705 of FIG. 7) may be a region corresponding to a shape in which the reinforcement member (e.g., the reinforcement member 705 of FIG. 7) is removed at least in part due to the conduit portion (e.g., the conduit portion 703 of FIG. 7).

According to an embodiment of the disclosure, a method of manufacturing an electronic device (e.g., the electronic device 101 of FIGs. 1 to 3, the electronic device 400 of FIG. 4) may include a board manufacturing process in which at least one via hole including at least one opening (e.g., the at least one opening 409 of FIG. 4) is formed on a printed circuit board (e.g., the printed circuit board 407 of FIG. 4). The method of manufacturing the electronic device (e.g., the electronic device 101 of FIGs. 1 to 3, the electronic device 400 of FIG. 4) may include a board coupling process in which the printed circuit board (e.g., the printed circuit board 407 of FIG. 4) is coupled to a speaker (e.g., the speaker 501 of FIG. 5) accommodated in a frame (e.g., the first frame 403 and second frame 405 of FIG. 4). The method of manufacturing the electronic device (e.g., the electronic device 101 of FIGs. 1 to 3, the electronic device 400 of FIG. 4) may include an assembling process in which the frame (e.g., the first frame 403 and second frame 405 of FIG. 4) is assembled to a support member (e.g., the support member 503 of FIG. 5) to form a resonance space (e.g., the resonance space 505 of FIG. 5) in which a sound wave generated from the speaker (e.g., the speaker 501 of FIG. 5) resonates due to the speaker (e.g., the speaker 501 of FIG. 5) and the printed circuit board (e.g., the printed circuit board 407 of FIG. 4). The assembling process may be a process in which the frame (e.g., the first frame 403 and second frame 405 of FIG. 4) and the printed circuit board (e.g., the printed circuit board 407 of FIG. 4)) are combined with the support member (e.g., the support member 503 of FIG. 5) to allow ventilation from the resonance space (e.g., the resonance space 505 of FIG. 5) to an inner space of the electronic device (e.g., the electronic device 101 of FIGs. 1 to 3, the electronic device 400 of FIG. 4) through the at least one opening (e.g., the at least one opening 409 of FIG. 5).

According to an embodiment of the disclosure, the board manufacturing process of the method of manufacturing the electronic device (e.g., the electronic device 101 of FIGs. 1 to 3, the electronic device 400 of FIG. 4) may include a process in which the at least one via hole is formed by applying a laser to the printed circuit board (e.g., the printed circuit board 407 of FIG. 4).

According to an embodiment of the disclosure, in the method of manufacturing the electronic device (e.g., the electronic device 101 of FIGs. 1 to 3, the electronic device 400 of FIG. 4), the printed circuit board 407 may include a flexible printed circuit board. The method of manufacturing the electronic device (e.g., the electronic device 101 of FIGs. 1 to 3, the electronic device 400 of FIG. 4) may further include a process in which one face of the reinforcement member (e.g., the reinforcement member 705 of FIG. 7) for supporting the flexible printed circuit board is attached to the flexible printed circuit board (e.g., the printed circuit board 407 of FIG. 4), and the other face is attached to the support member (e.g., the support member 503 of FIG. 5).

According to an embodiment of the disclosure, the method of manufacturing the electronic device (e.g., the electronic device 101 of FIGs. 1 to 3, the electronic device 400 of FIG. 4) may further include a process in which a conduit portion (e.g., the conduit portion 703 of FIG. 7) including a conduit which couples the resonance space (e.g., the resonance space 505 of FIG. 5) from the at least one opening (e.g., the at least one opening 409 of FIG. 4) between the flexible printed circuit board (e.g., the printed circuit board 407 of FIG. 4) and the support member 503 is formed in the reinforcement member.

According to an embodiment of the disclosure, the method of manufacturing the electronic device (e.g., the electronic device 101 of FIGs. 1 to 3, the electronic device 400 of FIG. 4) may further include a process in which an adhesive tape (e.g., the adhesive tape 901 of FIG. 9) is formed in a region corresponding to the shape of the reinforcement member (e.g., the reinforcement member 705 of FIG. 7). The adhesive tape (e.g., the adhesive tape 901 of FIG. 9) may seal between the reinforcement member (e.g., the reinforcement member 705 of FIG. 7) and the support member (e.g., the support member 503 of FIG. 5). The region corresponding to the shape of the reinforcement member (e.g., the reinforcement member 705 of FIG. 7) may be a region corresponding to a shape in which the reinforcement member (e.g., the reinforcement member 705 of FIG. 7) is removed at least in part due to the conduit portion (e.g., the conduit portion 703 of FIG. 7).

According to an embodiment of the disclosure, a speaker device (e.g., the speaker device 401 of FIG. 4) may include a speaker (e.g., the speaker 501 of FIG. 5). The speaker device (e.g., the speaker device 401 of FIG. 4) may include a frame (e.g., the first frame 403 and second frame 405 oaf FIG. 4) accommodating the speaker (e.g., the speaker 501 of FIG. 5) and forming a resonance space (e.g., the resonance space 505 of FIG. 5) in which a sound wave generated from the speaker (e.g., the speaker 501 of FIG. 5) resonates. The speaker device (e.g., the speaker device 401 of FIG. 4) may include a printed circuit board (e.g., the printed circuit board 407 of FIG. 4) drawn out to an outer space, such as the housing inner space, by penetrating the frame (e.g., the first frame 403 and second frame 405 of FIG. 4), and electrically coupled to the speaker (e.g., the speaker 501 of FIG. 5). The printed circuit board (e.g., the printed circuit board 407 of FIG. 4) may include at least one opening (e.g., the at least one opening 409 of FIG. 4) which couples the resonance space (e.g., the resonance space 505 of FIG. 5) and the outer space, such as the housing inner space.

According to an embodiment of the disclosure, in the speaker device (e.g., the speaker device 401 of FIG. 4), the printed circuit board (e.g., the printed circuit board 407 of FIG. 4) may include a flexible printed circuit board. The speaker device (e.g., the speaker device 401 of FIG. 4) may further include a reinforcement member (e.g., the reinforcement member 705 of FIG. 7) for supporting the flexible printed circuit board.

According to an embodiment of the disclosure, the speaker device (e.g., the speaker device 401 of FIG. 4) may further include a support portion (e.g., the support member 503 of FIG. 5) which supports the frame (e.g., the first frame 403 and second frame 405 of FIG. 4). The reinforcement member (e.g., the reinforcement member 705 of FIG. 7) may have one face attached to the flexible printed circuit board (e.g., the printed circuit board 407 of FIG. 4) and the other face attached to the support portion (e.g., the support member 503 of FIG. 5). The reinforcement member may include a conduit portion (e.g., the conduit portion 703 of FIG. 7) forming a conduit which couples the resonance space (e.g., the resonance space 505 of FIG. 5) from the at least one opening (e.g., the at least one opening 409 of FIG. 4) between the flexible printed circuit board (e.g., the printed circuit board 407 of FIG. 4) and the support portion (e.g., the support member 503 of FIG. 5).

According to an embodiment of the disclosure, the at least one opening (e.g., the at least one opening 409 of FIG. 4) may include at least one fine opening produced in a process of forming a through-hole of the flexible printed circuit board (e.g., the printed circuit board 407 of FIG. 4).

According to an embodiment, the speaker device (e.g., the speaker device 401 of FIG. 4) may further include an adhesive tape (e.g., the adhesive tape 901 of FIG. 9) formed in a region corresponding to a shape of the reinforcement member (e.g., the reinforcement member 705 of FIG. 7). The adhesive tape (e.g., the adhesive tape 901 of FIG. 9) may seal between the reinforcement member (e.g., the reinforcement member 705 of FIG. 7) and the support portion (e.g., the support member 503 of FIG. 5). The region corresponding to the shape of the reinforcement member (e.g., the reinforcement member 705 of FIG. 7) may be a region corresponding to a shape in which the reinforcement member (e.g., the reinforcement member 705 of FIG. 7) is removed at least in part due to the conduit portion (e.g., the conduit portion 703 of FIG. 7).

The disclosure has the following advantages according to an embodiment.

According to an embodiment of the disclosure, an electronic device may use at least one fine opening to adjust an atmospheric pressure difference inside/outside a speaker device through an air flow between a resonance space in which a sound wave generated from a speaker radiates and a housing space inside the electronic device, thereby preventing a damage of the speaker.

According to an embodiment of the disclosure, since an opening is provided together on a printed circuit board of an electronic device, there is no need to manufacture and provide an additional opening, thereby reducing manufacturing coast.

In addition thereto, various effects which are directly or indirectly understood through the disclosure may be provided.

Methods based on the embodiments disclosed in the claims and/or specification of the disclosure may be implemented in hardware, software, or a combination of both.

When implemented in software, computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

The program (i.e., the software module or software) may be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

The "unit" and the "module" may be implemented by a program stored in an addressable storage medium and executable by the processor. For example, the "unit" and "module" may be implemented by software components, object-oriented software components, class components, and task components, processes, functions, attributes, procedures, subroutines, segments of program code, drivers, firmware, microcode, circuitry, data, databases, data structures, tables, arrays, and variables.

Specific implementations described in the disclosure are only one embodiment, and do not limit the scope of the disclosure in any way. For brevity of the specification, descriptions on the conventional electronic components, control systems, software, and other functional aspects of the systems may be omitted.

In addition, in the disclosure, "including at least one of a, b, or c" may mean "including only a", "including only b", "including only c", "including a and b", "including b and c", " including a and c", or "including a, b, and c".

While the disclosure has been shown and described with reference to certain preferred embodiments thereof, it will be understood by those skilled in the art that various changes in form and details may be made therein without departing from the scope of the disclosure as defined by the appended claims. Therefore, the scope of the disclosure is defined not by the detailed description thereof but by the appended claims.

## Claims

1. An electronic device (101, 400) comprising:
a housing (220) having an inner space; and
a speaker device (401) disposed in the inner space of the housing (220), wherein the inner space (507) is formed at an outside of the speaker device (401),
wherein the speaker device (401) includes:
a speaker (501);
a frame (403, 405) that accommodates the speaker (501); and
a printed circuit board (407) coupled to the speaker (501),
wherein the speaker has a front face facing an opening (509) of the frame (403, 405) through which a sound wave is emitted and a rear face facing a resonance space (505),
wherein the rear face of the speaker (501), the frame (403, 405) and the printed circuit board (407) form the resonance space (505) in which a sound wave generated from the speaker (501) resonates,
wherein at least a portion of the printed circuit board (407) is disposed between the resonance space (505) and the inner space (507),
wherein the printed circuit board (407) includes at least one opening (409) penetrating the printed circuit board (407), and
wherein the at least one opening (409) is disposed at the at least portion of the printed circuit board (407) which is disposed between the resonance space (505) and the inner space (507), and
wherein the at least one opening (409) is configured to reduce a pressure difference between the resonance space (505) and the inner space (507) by enabling movement of air between the resonance space (505) and the inner space (507).

2. The electronic device (101, 400) of claim 1, wherein the printed circuit board (407) includes a flexible printed circuit board, and wherein the electronic device (101, 400) further comprises a reinforcement member which includes a conduit portion forming at least portion of a conduit coupling the resonance space (505) from the at least one opening (409), and
wherein the reinforcement member supports at least portion of the flexible printed circuit board.

3. The electronic device (101, 400) of claim 2, further comprising:
a support portion which supports the frame (403, 405),
wherein the reinforcement member has one face attached to the flexible printed circuit board and the other face attached to the support portion, and
wherein the conduit portion forms the conduit between the flexible printed circuit board and the support portion.

4. The electronic device (101, 400) of claim 3, wherein the flexible printed circuit board further includes a conductive pattern formed at least in part in a region corresponding to a region in which the conduit portion is disposed.

5. The electronic device (101, 400) of claim 3 or 4, wherein the at least one opening (409) includes at least one fine opening produced in a process of forming a through-hole of the flexible printed circuit board, wherein preferably the at least one fine opening is formed in a region corresponding to the conduit portion inside the flexible printed circuit board.

6. The electronic device (101, 400) of any of the preceding claims, further comprising at least one processor (120) electrically coupled to the speaker (501) through the printed circuit board (407), wherein the at least one processor transmits a signal for controlling the speaker (501) through the printed circuit board (407), or receives a signal from the speaker (501).

7. The electronic device of claim 1, wherein the resonance space in which the sound wave generated from the speaker resonates is a back volume space of the frame.

8. The electronic device (101, 400) of any of the preceding claims, wherein a vent hole (411) is formed on the housing (220) between the inner space (507) and the outside of the housing (220).

9. The electronic device (101, 400) of claim 3, further comprising an adhesive tape formed in a region corresponding to a shape of the reinforcement member.

10. The electronic device (101, 400) of claim 9,
wherein the adhesive tape seals between the reinforcement member and the support portion, and
wherein the region corresponding to the shape of the reinforcement member is a region corresponding to a shape in which the reinforcement member is removed at least in part due to the conduit portion.

11. A method (1000, 1100) of manufacturing an electronic device that includes a housing having an inner space and a speaker device disposed in the inner space of the housing (220), wherein the inner space (507) is formed at an outside of the speaker device (401), wherein the speaker device (401) includes a speaker (501), a frame (403, 405) that accommodates the speaker (501), and a printed circuit board (407) coupled to the speaker (501), the method comprising:
a board manufacturing process (1001, 1101) in which at least one via hole including at least one opening is formed on a printed circuit board;
a board coupling process (1003, 1111) in which the printed circuit board is coupled to a speaker accommodated in a frame; and
an assembling process (1005, 1113) in which the frame and the printed circuit board are coupled to a support member to form a resonance space in which a sound wave generated from a rear side of the speaker can resonate while a front face of the speaker can emit a sound wave to the inner space,
wherein the assembling process (1005, 1113) is a process in which the frame and the printed circuit board are combined with the support member to allow ventilation from the resonance space to the inner space through the at least one opening,
wherein the speaker has a front face facing an opening (509) of the frame (403, 405) through which a sound wave is emitted and a rear face facing a resonance space (505),
wherein the rear face of the speaker (501), the frame (403, 405) and the printed circuit board (407) form the resonance space (505) in which a sound wave generated from the speaker (501) resonates,
wherein the at least one opening (409) is configured to reduce a pressure difference between the resonance space (505) and the inner space (507) by enabling movement of air between the resonance space (505) and the inner space (507).

12. The method of claim 11, wherein the board manufacturing process (1001, 1101) includes a process in which the at least one via hole is formed by applying a laser to the printed circuit board.

13. The method of claim 11 or 12, wherein the printed circuit board includes a flexible printed circuit board, and the method further comprises a process in which one face of the reinforcement member for supporting the flexible printed circuit board is attached to the flexible printed circuit board, and the other face is attached to the support member.

14. The method of claim 13, further comprising a process in which a conduit portion including a conduit which couples the resonance space from the at least one opening between the flexible printed circuit board and the support member is formed in the reinforcement member.

15. The method of claim 14, further comprising:
a process in which an adhesive tape is formed in a region corresponding to the shape of the reinforcement member,
wherein the adhesive tape seals between the reinforcement member and the support member, and
wherein a region corresponding to a shape of the reinforcement member is a region corresponding to a shape in which the reinforcement member is removed at least in part due to the conduit portion.

## Patentansprüche

1. Elektronische Vorrichtung (101, 400), die Folgendes umfasst:
ein Gehäuse (220) mit einem Innenraum; und
eine Lautsprechervorrichtung (401), die in dem Innenraum des Gehäuses (220) angeordnet ist, wobei der Innenraum (507) an einer Außenseite der Lautsprechervorrichtung (401) gebildet ist,
wobei die Lautsprechervorrichtung (401) Folgendes einschließt:
einen Lautsprecher (501);
einen Rahmen (403, 405), der den Lautsprecher (501) aufnimmt; und
eine Leiterplatte (407), die mit dem Lautsprecher (501) gekoppelt ist,
wobei der Lautsprecher eine vordere Fläche aufweist, die auf eine Öffnung (509) des Rahmens (403, 405) gerichtet ist, durch die eine Schallwelle emittiert wird, und eine hintere Fläche, die auf einen Resonanzraum (505) gerichtet ist,
wobei die hintere Fläche des Lautsprechers (501), der Rahmen (403, 405) und die Leiterplatte (407) den Resonanzraum (505) bilden, in dem eine von dem Lautsprecher (501) erzeugte Schallwelle schwingt,
wobei zumindest ein Abschnitt der Leiterplatte (407) zwischen dem Resonanzraum (505) und dem Innenraum (507) angeordnet ist,
wobei die Leiterplatte (407) zumindest eine Öffnung (409) einschließt, die die Leiterplatte (407) durchdringt, und
wobei die zumindest eine Öffnung (409) an dem zumindest einen Abschnitt der Leiterplatte (407) angeordnet ist, der zwischen dem Resonanzraum (505) und dem Innenraum (507) angeordnet ist, und
wobei die zumindest eine Öffnung (409) so konfiguriert ist, dass sie eine Druckdifferenz zwischen dem Resonanzraum (505) und dem Innenraum (507) verringert, indem sie einen Luftstrom zwischen dem Resonanzraum (505) und dem Innenraum (507) ermöglicht.

2. Elektronische Vorrichtung (101, 400) nach Anspruch 1, wobei die Leiterplatte (407) eine flexible Leiterplatte einschließt, und wobei die elektronische Vorrichtung (101, 400) ferner ein Verstärkungselement umfasst, das einen Leitungsabschnitt einschließt, der zumindest einen Abschnitt einer Leitung bildet, die den Resonanzraum (505) von der zumindest einen Öffnung (409) koppelt, und
wobei das Verstärkungselement zumindest einen Abschnitt der flexiblen Leiterplatte stützt.

3. Elektronische Vorrichtung (101, 400) nach Anspruch 2, die ferner Folgendes umfasst:
einen Stützabschnitt, der den Rahmen (403, 405) stützt,
wobei eine Fläche des Verstärkungselements an der flexiblen Leiterplatte angebracht ist und die andere Fläche an dem Stützabschnitt angebracht ist; und
wobei der Leitungsabschnitt die Leitung zwischen der flexiblen Leiterplatte und dem Stützabschnitt bildet.

4. Elektronische Vorrichtung (101, 400) nach Anspruch 3, wobei die flexible Leiterplatte ferner ein Leiterbild einschließt, das zumindest teilweise in einem Bereich gebildet ist, der einem Bereich entspricht, in dem der Leitungsabschnitt angeordnet ist.

5. Elektronische Vorrichtung (101, 400) nach Anspruch 3 oder 4, wobei die zumindest eine Öffnung (409) zumindest eine feine Öffnung einschließt, die in einem Verarbeitungsprozess zum Bilden eines Durchgangslochs der flexiblen Leiterplatte hergestellt wird, wobei die zumindest eine feine Öffnung vorzugsweise in einem Bereich innerhalb der flexiblen Leiterplatte gebildet wird, der dem Leitungsabschnitt entspricht.

6. Elektronische Vorrichtung (101, 400) nach einem der vorhergehenden Ansprüche, die ferner zumindest einen Prozessor (120) umfasst, der über die Leiterplatte (407) elektrisch mit dem Lautsprecher (501) gekoppelt ist, wobei der zumindest eine Prozessor ein Signal zur Steuerung des Lautsprechers (501) durch die Leiterplatte (407) überträgt oder ein Signal von dem Lautsprecher (501) empfängt.

7. Elektronische Vorrichtung nach Anspruch 1, wobei der Resonanzraum, in dem die von dem Lautsprecher erzeugte Schallwelle schwingt, ein hinterer Volumenraum des Rahmens ist.

8. Elektronische Vorrichtung (101, 400) nach einem der vorhergehenden Ansprüche, wobei an dem Gehäuse (220) zwischen dem Innenraum (507) und der Außenseite des Gehäuses (220) ein Entlüftungsloch (411) gebildet ist.

9. Elektronische Vorrichtung (101, 400) nach Anspruch 3, die ferner ein Klebeband umfasst, das in einem Bereich gebildet ist, der einer Form des Verstärkungselements entspricht.

10. Elektronische Vorrichtung (101, 400) nach Anspruch 9,
wobei das Klebeband zwischen dem Verstärkungselement und dem Stützabschnitt abdichtet, und
wobei es sich bei dem der Form des Verstärkungselements entsprechenden Bereich um einen Bereich handelt, der einer Form entspricht, in der das Verstärkungselement zumindest teilweise aufgrund des Leitungsabschnitts entfernt wurde.

11. Verfahren (1000, 1100) zur Herstellung einer elektronischen Vorrichtung, die ein Gehäuse mit einem Innenraum und eine in dem Innenraum des Gehäuses (220) angeordnete Lautsprechervorrichtung aufweist, wobei der Innenraum (507) an einer Außenseite der Lautsprechervorrichtung (401) gebildet ist, wobei die Lautsprechervorrichtung (401) einen Lautsprecher (501), einen Rahmen (403, 405), der den Lautsprecher (501) aufnimmt, und eine Leiterplatte (407), die mit dem Lautsprecher (501) gekoppelt ist, umfasst, wobei das Verfahren Folgendes umfasst:
einen Leiterplattenherstellungsprozess (1001, 1101), bei dem zumindest ein Kontaktloch mit zumindest einer Öffnung auf einer Leiterplatte gebildet wird;
einen Leiterplatten-Kopplungsprozess (1003, 1111), bei dem die Leiterplatte mit einem in einem Rahmen aufgenommenen Lautsprecher gekoppelt wird; und
einen Montageprozess (1005, 1113), bei dem der Rahmen und die Leiterplatte mit einem Stützelement gekoppelt werden, um einen Resonanzraum zu bilden, in dem eine von einer hinteren Seite des Lautsprechers erzeugte Schallwelle in Schwingung treten kann, während eine vordere Fläche des Lautsprechers eine Schallwelle in den Innenraum emittieren kann,
wobei es sich bei dem Montageprozess (1005, 1113) um einen Prozess handelt, bei dem der Rahmen und die Leiterplatte mit dem Stützelement kombiniert werden, um eine Belüftung von dem Resonanzraum zu dem Innenraum durch die zumindest eine Öffnung zuzulassen,
wobei der Lautsprecher eine vordere Fläche aufweist, die auf eine Öffnung (509) des Rahmens (403, 405) gerichtet ist, durch die eine Schallwelle emittiert wird, und eine hintere Fläche, die auf einen Resonanzraum (505) gerichtet ist,
wobei die hintere Fläche des Lautsprechers (501), der Rahmen (403, 405) und die Leiterplatte (407) den Resonanzraum (505) bilden, in dem eine von dem Lautsprecher (501) erzeugte Schallwelle schwingt,
wobei die zumindest eine Öffnung (409) so konfiguriert ist, dass sie eine Druckdifferenz zwischen dem Resonanzraum (505) und dem Innenraum (507) verringert, indem sie einen Luftstrom zwischen dem Resonanzraum (505) und dem Innenraum (507) ermöglicht.

12. Verfahren nach Anspruch 11, wobei der Leiterplattenherstellungsprozess (1001, 1101) einen Prozess einschließt, bei dem das zumindest eine Kontaktloch durch Anwendung eines Lasers auf die Leiterplatte gebildet wird.

13. Verfahren nach Anspruch 11 oder 12, wobei die Leiterplatte eine flexible Leiterplatte umfasst und das Verfahren ferner einen Prozess umfasst, bei dem eine Fläche des Verstärkungselements zum Stützen der flexiblen Leiterplatte an der flexiblen Leiterplatte angebracht wird und die andere Fläche an dem Stützelement angebracht wird.

14. Verfahren nach Anspruch 13, ferner umfassend einen Prozess, bei dem in dem Verstärkungselement ein Leitungsabschnitt mit einer Leitung, die den Resonanzraum von der zumindest einen Öffnung zwischen der flexiblen Leiterplatte und dem Stützelement koppelt, gebildet wird.

15. Verfahren nach Anspruch 14, das ferner Folgendes umfasst:
einen Prozess, bei dem ein Klebeband in einem Bereich gebildet wird, der der Form des Verstärkungselements entspricht,
wobei das Klebeband zwischen dem Verstärkungselement und dem Stützelement abdichtet, und
wobei es sich bei einem der Form des Verstärkungselements entsprechenden Bereich um einen Bereich handelt, der einer Form entspricht, in der das Verstärkungselement zumindest teilweise aufgrund des Leitungsabschnitts entfernt wurde.

## Revendications

1. Appareil électronique (101, 400) comprenant :
un boîtier (220) ayant un espace intérieur, et
un dispositif à haut-parleur (401) disposé dans l'espace intérieur du boîtier (220), ledit espace intérieur (507) étant formé à l'extérieur du dispositif à haut-parleur (401) ;
ledit dispositif à haut-parleur (401) comprenant :
un haut-parleur (501),
un châssis (403, 405) qui reçoit le haut-parleur (501), et
une carte de circuit imprimé (407) couplée au haut-parleur (501) ;
ledit haut-parleur présentant une face avant tournée vers une ouverture (509) du châssis (403, 405) et à travers laquelle une onde sonore est émise et une face arrière tournée vers un espace de résonance (505),
ladite face arrière du haut-parleur (501), ledit châssis (403, 405) et ladite carte de circuit imprimé (407) formant l'espace de résonance (505) dans lequel résonne une onde sonore générée par le haut-parleur (501),
au moins une portion de la carte de circuit imprimé (407) étant disposée entre l'espace de résonance (505) et l'espace intérieur (507),
ladite carte de circuit imprimé (407) comprenant au moins une ouverture (409) pénétrant dans ladite carte de circuit imprimé (407), et
ladite au moins une ouverture (409) étant disposée sur ladite au moins une portion de la carte de circuit imprimé (407) qui est disposée entre l'espace de résonance (505) et l'espace intérieur (507), et
ladite au moins une ouverture (409) étant conçue pour réduire une différence de pression entre l'espace de résonance (505) et l'espace intérieur (507) en permettant un passage d'air entre l'espace de résonance (505) et l'espace intérieur (507).

2. Appareil électronique (101, 400) selon la revendication 1, dans lequel la carte de circuit imprimé (407) comprend une carte de circuit imprimé flexible, et dans lequel l'appareil électronique (101, 400) comprend en outre un élément de renfort qui comprend une partie de conduit formant au moins une portion d'un conduit reliant l'espace de résonance (505) à partir de ladite au moins une ouverture (409), et
dans lequel l'élément de renfort supporte au moins une portion de la carte de circuit imprimé flexible.

3. Appareil électronique (101, 400) selon la revendication 2, comprenant en outre :
une portion de support qui supporte le châssis (403, 405) ;
ledit élément de renfort présentant une face rattachée à la carte de circuit imprimé flexible et l'autre face rattachée à la portion de support, et
ladite portion de conduit formant le conduit entre la carte de circuit imprimé flexible et la portion de support.

4. Appareil électronique (101, 400) selon la revendication 3, dans lequel la carte de circuit imprimé flexible comprend en outre un motif conducteur formé au moins en partie dans une région correspondant à une région dans laquelle est située la portion de conduit.

5. Appareil électronique (101, 400) selon la revendication 3 ou 4, dans lequel ladite au moins une ouverture (409) comprend au moins une ouverture fine produite lors d'un processus de formation d'un trou traversant de la carte de circuit imprimé flexible, ladite au moins une ouverture fine étant de préférence formée dans une région correspondant à la portion de conduit à l'intérieur de la carte de circuit imprimé flexible.

6. Appareil électronique (101, 400) selon l'une quelconque des revendications précédentes, comprenant en outre au moins un processeur (120) couplé électriquement au haut-parleur (501) par l'intermédiaire de la carte de circuit imprimé (407), ledit au moins un processeur transmettant un signal permettant de commander le haut-parleur (501) par l'intermédiaire de la carte de circuit imprimé (407), ou recevant un signal en provenance du haut-parleur (501).

7. Appareil électronique selon la revendication 1, dans lequel l'espace de résonance dans lequel résonne l'onde sonore générée par le haut-parleur est un espace de volume arrière du châssis.

8. Appareil électronique (101, 400) selon l'une quelconque des revendications précédentes, dans lequel un trou d'aération (411) est formé sur le boîtier (220) entre l'espace intérieur (507) et l'extérieur du boîtier (220).

9. Appareil électronique (101, 400) selon la revendication 3, comprenant en outre un ruban adhésif formé dans une région correspondant à la forme de l'élément de renfort.

10. Appareil électronique (101, 400) selon la revendication 9,
dans lequel le ruban adhésif assure l'étanchéité entre l'élément de renfort et la portion de support, et
dans lequel la région correspondant à la forme de l'élément de renfort est une région correspondant à une forme dans laquelle l'élément de renfort a été supprimé au moins en partie en raison de la portion de conduit.

11. Procédé (1000, 1100) de fabrication d'un appareil électronique comprenant un boîtier doté d'un espace intérieur et un dispositif haut-parleur disposé dans ledit espace intérieur du boîtier (220), ledit espace intérieur (507) étant formé à l'extérieur du dispositif à haut-parleur (401), ledit dispositif à haut-parleur (401) comprenant un haut-parleur (501), un châssis (403, 405) recevant le haut-parleur (501), et une carte de circuit imprimé (407) couplée au haut-parleur (501), le procédé comprenant :
un processus de fabrication de carte (1001, 1101) lors duquel au moins un trou d'interconnexion présentant au moins une ouverture est formé sur une carte de circuit imprimé,
un processus de couplage de carte (1003, 1111) lors duquel la carte de circuit imprimé est couplée à un haut-parleur reçu dans un châssis, et
un processus d'assemblage (1005, 1113) lors duquel le châssis et la carte de circuit imprimé sont couplés à un élément de support pour former un espace de résonance dans lequel une onde sonore générée à partir d'une face arrière du haut-parleur peut résonner tandis qu'une face avant du haut-parleur peut émettre une onde sonore vers l'espace intérieur ;
ledit processus d'assemblage (1005, 1113) étant un processus lors duquel le châssis et la carte de circuit imprimé sont combinés avec l'élément de support pour permettre la ventilation depuis l'espace de résonance vers l'espace intérieur à travers l'au moins une ouverture,
ledit haut-parleur présentant une face avant tournée vers une ouverture (509) du châssis (403, 405) et à travers laquelle une onde sonore est émise ainsi qu'une face arrière tournée vers un espace de résonance (505),
ladite face arrière du haut-parleur (501), ledit châssis (403, 405) et ladite carte de circuit imprimé (407) formant l'espace de résonance (505) dans lequel résonne une onde sonore générée par le haut-parleur (501),
ladite au moins une ouverture (409) étant conçue pour réduire une différence de pression entre l'espace de résonance (505) et l'espace intérieur (507) en permettant un passage d'air entre l'espace de résonance (505) et l'espace intérieur (507).

12. Procédé selon la revendication 11, dans lequel le processus de fabrication de carte (1001, 1101) comprend un processus lors duquel au moins un trou d'interconnexion est formé par application d'un laser sur la carte de circuit imprimé.

13. Procédé selon la revendication 11 ou 12, dans lequel la carte de circuit imprimé comprend une carte de circuit imprimé flexible, et le procédé comprend en outre un processus lors duquel une face de l'élément de renfort destinée à supporter la carte de circuit imprimé flexible est rattachée à la carte de circuit imprimé flexible, et l'autre face est rattachée à l'élément de support.

14. Procédé selon la revendication 13, comprenant en outre un processus lors duquel une portion de conduit présentant un conduit qui couple l'espace de résonance à partir de l'au moins une ouverture entre la carte de circuit imprimé flexible et l'élément de support est formée dans l'élément de renfort.

15. Procédé selon la revendication 14, comprenant en outre :
un processus lors duquel un ruban adhésif est formé dans une région correspondant à la forme de l'élément de renfort ;
ledit ruban adhésif assurant l'étanchéité entre l'élément de renfort et l'élément de support, et
une région correspondant à la forme de l'élément de renfort étant une région correspondant à une forme dans laquelle l'élément de renfort a été supprimé au moins en partie en raison de la portion de conduit.
